# EUROPEAN PATENT APPLICATION

(11) **EP 3 393 174 A1**
(43) Date of publication of application: **24.10.2018**
(21) Application number: 17167617.4
(22) Date of filing: 21.04.2017
(51) Int. Cl.: H04W 48/16, H04W 48/20, H04W 48/12, H04W 16/00

(54) **METHOD FOR CELL RESELECTION FOR USER EQUIPMENTS SUPPORTING NARROWBAND MODULATION**

(71) Applicant: Gemalto M2M GmbH, 81541 Munich (DE)
(72) Inventor: BREUER, Volker, 16727 Boetzow (DE); WEHMEIER, Lars, 14612 Falkensee (DE)
(74) Representative: Grevin, Emmanuel

(57) **Abstract**

The present invention relates to a method for cell reselection of a user equipment from a first to a second base station of a cellular network, the base stations are configured to operate in a frequency range comprising a plurality of subcarriers, and at least one base station is configured to support a narrowband modulation scheme for at least one of the plurality of subcarriers, wherein at least one of the base stations is configured to activate a power boost mode comprising a power increase for at least one of the narrowband modulated subcarriers, and the user equipment is camping on one of the base stations, hereinafter the serving base station, further the user equipment is maintaining a predetermined suitability level of the signal strength of the serving base station, the method comprising the steps for the user equipment of:
- determining an outdoor condition indicator depicting if the user equipment is operated in outdoor conditions or in indoor conditions,
in case outdoor conditions indicator is set to outdoor:
- determining an outdoor suitability level considering the predetermined suitability level and a predetermined suitability factor,
- in case the signal strength of the serving base station is below the outdoor suitability level, carrying out measurements of the signal strength of at least one of the base stations different from the serving base station, and
- when the signal strength of the at least one base station different from the serving base station is above the signal strength of the serving base station, carrying out a cell reselection to the measured base station different from the serving base station.

## Description

### FIELD OF THE INVENTION

The present invention relates to a method for cell reselection of user equipments operating with base stations for narrowband modulation.

The invention also pertains to a user equipment using said method.

### BACKGROUND OF THE INVENTION

In the field of wireless communication it has recently been specified an embedded modulation scheme in the normal long term evolution (LTE) frequency band for narrowband usage. In the area of LTE this is called LTE Category Narrow-Band (resp. LTE Cat-NB, or simply NB-IoT, which indicates the addressed use case of Internet of Things). The narrowband subcarriers in the addressed frequency band are in particular deployed either in-band, that means among the subcarriers of the regular modulation in the respective standard, in the guard-band, that means at the edges of the regular modulation, or out-of-band, that means in other frequency ranges not in direct proximity to the regular modulation subcarriers.
The definition of the narrowband category comprises that the base stations (in LTE the so-called eNodeBs) are capable of activating for the narrowband carriers additional power compared to the regular modulation carriers, in particular for deployment schemes in proximity to the regular modulation carriers, that is inband and/or in guard-band.
Such additional power is foreseen for decreasing the search time and the power consumption of the user equipments in bad coverage situations like in indoor situation, such for improving indoor coverage. For NB-IoT such additional power is called power boost according to ETSI TS 36.802 Rel. 13.0, Chap. 7.1.3).
This power boost causes on the other hand issues for cell reselection of the user equipment.

For NB-IoT two typical use cases for devices can be distinguished, devices being static and operating indoor (e.g. metering devices), devices being mobile and operating outdoor (e.g. tracking & tracing). Though typically NB-IoT user equipments are operating stationary, this does not mean that no cell reselections are required for user equipments supporting NB-IoT. For doing a cell-reselection it is common practice in many standard generations, that the received power of another cell exceeds a given suitability level. This relation is expressed by the cell selection criterion Sᵣₓₗₑᵥ, where a cell reselection is carried out when *Sᵣₓₗₑᵥ* > *0*. This requires that the user equipment starts measuring the received power from other cell's eNodeBs. Precondition for such measurements is that the current active cell eNodeB does not provide sufficient power anymore resp. the power received from the serving cell is below a given threshold. For that it is defined that the Sᵣₓₗₑᵥ is below a given threshold S_{IntrasearchP}. This threshold value is signaled by the base station for the respective cell. A certain range is available for signaling said value for all LTE cells, including the NB-IoT supporting cells.
With the power boosting mentioned above it appears that the search for neighbor cells starts much later for a user equipment moving away from the current active cell, than without. That affects in particular user equipments operating in outdoor conditions, that is where no power boosting would be needed. Thus when the measuring start condition Sᵣₓₗₑᵥ ≤ S_{IntrasearchP} is met, then the user equipment is normally already far away from the current active eNodeB, and a neighbor cell eNodeB is probably much stronger.
This causes for the cellular network and the user equipment disadvantages as it requires much more power to decode the serving cell eNodeBs signals, which is in vain as an eNodeB with better suitability would be available. This is in particular disadvantageous as NB-IoT devices are often operated with a battery and are supposed to last a long time with such a battery without any maintenance. This unequal user equipment distribution affects also cellular network's capacity to serve such devices.

Simply increasing the Sᵣₓₗₑᵥ for NB-IoT devices, as described in 3GPP TSG-RAN WG2 meeting #97bis contribution R2-1702929 would not solve the issue as then for user equipments operating indoor this would mean that they would start too early with their measurements, effectively it could even happen that they permanently measure neighbor cell power, which would drain the battery as well.
It therefore requires a solution to the mentioned problem that allows for the user equipments to measure earlier for better suitable neighbor cell eNodeBs, and in effect allow to reduce power consumption for simple idle operation.

It is therefore the goal of present invention to overcome the mentioned disadvantages and to propose a solution for an improved cell reselection mechanism for user equipments operating in narrowband modulation.

Further alternative and advantageous solutions would, accordingly, be desirable in the art.

### SUMMARY OF THE INVENTION

For this it is according to a first aspect of the invention suggested a method for cell reselection of a user equipment according to claim 1. It is further suggested according to a second aspect of the invention a user equipment according to claim 8.

According to the first aspect of the invention it is proposed a method for cell reselection of a user equipment from a first to a second base station of a cellular network, the base stations are configured to operate in a frequency range comprising a plurality of subcarriers, and at least one base station is configured to support a narrowband modulation scheme for at least one of the plurality of subcarriers, wherein at least one of the base stations is configured to activate a power boost mode comprising a power increase for at least one of the narrowband modulated subcarriers, and the user equipment is camping on one of the base stations, hereinafter the serving base station, further the user equipment is maintaining a predetermined suitability level of the signal strength of the serving base station, the method comprising the steps for the user equipment of:
- determining an outdoor condition indicator depicting if the user equipment is operated in outdoor conditions or in indoor conditions,
in case the outdoor condition indicator is set to outdoor:
- determining an outdoor suitability level considering the predetermined suitability level and a predetermined suitability factor,
- in case the signal strength of the serving base station is below the outdoor suitability level, carrying out measurements of the signal strength of at least one of the base stations different from the serving base station, and
- when the signal strength of the at least one base station different from the serving base station is above the signal strength of the serving base station, carrying out a cell reselection to the measured base station different from the serving base station.

The inventive method is related to a user equipment operating with a cellular network, in particular of the 4^{th} generation of technology standard known as Long Term Evolution (LTE). Such cellular network comprises a plurality of base stations, in the nomenclature of LTE called eNodeB. The base station is the interface for user equipments operating in the cellular network.

At least a subset of base stations supports an embedded modulation scheme for narrowband usage, in particular LTE Category Narrow-Band (in short NB-IoT). Typically the base stations support both regular LTE, covering at least one full frequency range and the embedded modulation scheme like NB-IoT. Such embedded modulation scheme affects one or more subcarriers, which in LTE relates to a range of 15 kHz.

The embedded modulation scheme is preferably deployed in one of the deployment schemes inband, out-of-band (or standalone) and in the guard band of the regular frequency ranges.

The respective user equipment is capable of operating with the embedded modulation scheme like NB-IoT, in particular only in NB-IoT. In that case the user equipment would only be able to camp on base stations which support NB-IoT.

The inventive method of cell-reselection refers to the procedure of changing from one base station to another base station, in particular for getting improved service from the base station. This mainly relates to a moving user equipment, but also for stationary operated user equipments such procedure can apply, in case changes in propagation conditions, like shadowing, topology changes, e.g. a new base station nearby etc.

The method starts from a user equipment camping on a first base station, hereinafter the serving base station. While for user equipment operating in regular LTE a fixed predetermined suitability level of the serving base station is taken into account, for the situation of a user equipment operating in the narrowband modulation scheme it is first suggested to determine an outdoor condition indicator. Such outdoor condition indicator is meant to give an indication, if the user equipment is operating indoor or outdoor. Consequently for a user equipment operating in indoor conditions a different suitability level relating to the serving base station is to consider for the decision to make measurements on other base station.

Basically the predetermined suitability level has the purpose to avoid measurements for the user equipment, as long as the serving base station is well enough received at the user equipment. This is useful out of power saving reasons, in particular when operating on a battery. Typically the predetermined suitability level is transmitted, e.g. by way of broadcast in a system information block, to the user equipment. Additionally it typically relates to user equipments operating in the common LTE modulation scheme, hence both for narrowband and common usage the same predetermined suitability level is used. However a base station which is capable to activate a power boost mode on the narrowband modulated subcarrier is for a user equipment in outdoor conditions much longer well receivable as expected. The power boost is meant for reaching user equipments operating indoor. Hence, in indoor conditions the predetermined suitability level reaches its goal when the received signal strength equals the predetermined suitability level approximately halfway between the serving base station and the best neighbor base station.

By determining an outdoor condition indicator it is taken into account that said situation is different for a user equipment operating outdoor.

Hence, when the outdoor condition indicator is set, then instead of the predetermined suitability level an outdoor suitability level is used for detecting when to start measuring neighbor cell signals. According to the inventive method the outdoor suitability level considers the predetermined suitability level and a predetermined suitability factor.

According to a preferred embodiment the predetermined suitability factor relates to the power increase in the power boost mode. Hence with the predetermined suitability factor it is preferably envisaged to reduce the impact of the power boost.

When the received signal strength of the serving base station falls below the outdoor suitability level, then the user equipment starts measuring the signal strength of neighbor base stations. When a neighbor base station turns out to be more suitable than the serving base station, then a cell reselection is carried out. The suitability is usually expressed by the cell reselection criterion Sᵣₓₗₑᵥ, whereas a cell reselection is carried out when *Sᵣₓₗₑᵥ* > *0*.

For indoor conditions the normally known cell reselection is preferably carried out. Nonetheless it is also advantageous to maintain an indoor suitability level relating to the predetermined suitability level and an indoor related suitability factor, which are applied when the outdoor condition indicator indicates that the user equipment is operating indoor.

The inventive method is advantageous as it allows to distinguish the local situation of the addressed user equipment operating in the narrowband modulation scheme. The method consequently optimizes the power consumption situation on occasion of a possibly necessary or at least recommended cell reselection.

Additionally a second predetermined suitability level is preferably maintained for starting neighbor cell base station search, when on the same subcarrier as supported by the current serving base station no suitable neighbor cell is found, and such on other carriers a neighbor cell search is necessary. This second predetermined suitability level is known as S_{intersearchP} value. It is preferably handled similar as the predetermined suitability level mentioned above, which is known as S_{intrasearchP} value.

For the determination of the outdoor condition indicator various options are available. In the easiest form this information is already coded in situ of the user equipment. This is either foreseen by way of a preprogrammed resp. pre-entered value.

Alternatively this information is made available by means of a subscription based information, e.g. on the SIM-card, resp. any local subscription data storage like a soldered SIM, UICC, secure element or in a secured storage area. Known interfaces provide the user equipment with the actual value of the subscription based outdoor condition indicator.

Preferably the outdoor condition indicator is determined by the user equipment from its environment. This is more reliable as it reflects the real situation and simplifies the migration from legacy user equipment to new user equipment offering this feature.

According to an advantageous embodiment the determination of the outdoor condition indicator comprises:
- starting measurements when the predetermined suitability level is reached
- measuring the signal strength of at least one second base station,
- setting the outdoor condition indication when the signal strength of the at least one second base station is significantly higher than the signal strength of the serving base station.

This embodiment is based on the results of a first cell reselection resp. measurement of neighbor signals due to reaching the predetermined suitability level. When this is carried out in outdoor condition, then the power boost is necessarily affecting the time when the neighbor cell measurements are started.

When this is happening, then - due to the power boost - it is very likely that the user equipment is positioned much closer to a neighbor base station than to the serving base station once it reaches the predetermined suitability level. This results in a much higher signal strength of the closed neighbor base station in comparison to the serving base station. In optimal conditions the signal strength of both base station should complement on the cell edges, and additionally the cell edge should be the time when the user equipment is starting measurements of neighbor cells.

With the power boost, for a user equipment such situation does not apply, but the user equipment receives much stronger signals from the neighbor base station than from the serving base station. While that means that a cell reselection will then be carried out, this also means, that the cell reselection could have been carried out way earlier. Effectively due to that delay the user equipment did not operate in optimal conditions, in particular with respect to the power consumption.

Therefore, when such a situation once occurs, the user equipment detects that the signal strength from the serving base station and the signal strength of the neighbor base station, where it is about to carry out a cell reselection to, materially differ. That means the signal strength of at least one neighbor cell's base station is significantly higher than the signal strength of the serving base station. When such a situation is detected, the user equipment derives that it is operating in outdoor condition, and therefore sets the outdoor condition indicator to the respective value, in particular true.

Consequently the same determination in the other direction is carried out when a user equipment supposed to be operated in outdoor condition detects that when reaching the outdoor suitability level, and all detected neighbor base stations have significantly lower signal strength, then the outdoor condition indicator is set to a value indicating that indoor condition apply. This shows, that after the outdoor indicator is set, the situation can change again. Hence a repeated determination of outdoor or indoor conditions, in particular together with measurements that are anyhow carried out, is advantageous to assure that the outdoor condition indicator always reflects the real situation. According to a preferred embodiment it is suggest that the signal strength of the at least one second base station is significantly higher than the signal strength of the serving base station in case the difference of the signal strength corresponds to the minimum power increase of the power boost mode.

For setting a threshold when a signal strength of a neighbor cells base station is considered as being significantly higher than the signal strength of the serving base station, it is recommend to pick the minimum power increase of the power boost mode. According to ETSI TS 36.802, Chap 7.1.3.1, the NB-IoT power dynamic range has defined a minimum value of +6 dB. This is a preconfigured constant, and preferably taken into account. A value with directly derives from this value, e.g. 1 dB below this minimum value would presumably also be appropriate for the case that exactly the minimum power boost is carried out, and through minimal measurement inaccuracies the difference is slightly below that power boost.

In another preferred embodiment it is suggested that the user equipment determines a timing advance value and a free-space loss value, and that the determination of the outdoor condition indicator comprises:
- determining a first common comparison parameter derived from the timing advance value and a second common comparison parameter derived from the free-space loss value in outdoor propagation conditions,
- setting the outdoor condition indicator when the first common comparison parameter corresponds to the second common comparison indicator, wherein the common comparison parameter is at least one out of
- a time related value,
- a distance related value, and/or
- a signal power change value.

According to this embodiment the determination of outdoor conditions relates to a comparison of determined - in particular measured - common comparison parameters. The embodiment determines for the first common comparison parameter the timing advance value. The timing advance value is a correction factor for uplink signalling in an active connection, compensating propagation delays, in particular depending upon the distance of the user equipment from the eNodeB. For LTE the timing advance value is determined at the base station based on measurements received from the user equipment relating to a downlink signal at the eNodeB and provided in a 11 bit timing alignment value of a step width of 0,52 µs, corresponding to a theoretical maximum cell radius of 100km, for GSM this value is 35 km. Upon reception of the timing alignment value the user equipment aligns its transmission by the received value. From the received timing alignment value the user equipment can determine - considering speed of light - the assumed distance to the base station.

For the second common comparison parameter the user equipment determines its distance to the base station based upon the received signal strength, in particular received signal code power (RSCP). From the received signal strength the user equipment derives the path-loss, on which base the line-of-sight (LOS) distance can be calculated. For that preferably the free space path-loss is calculated, which is directly derived from the distance and frequency of transmission.

In an advantageous embodiment it is suggested that the free space loss value is derived from the measured signal strength at the user equipment and from the emitted power from the serving base station, further considering transmitter antenna gain and receiver antenna gain.

With this embodiment the difference between emitted and received power is determined, which is possible to be used for calculating the noise resp. signal to noise ratio (SNR). Based on one of these values the calculated distance to the base station is determined assuming line-of-sight, that is outdoor, conditions.

The distinction if the user equipment is operating indoor or outdoor conditions is made based on the difference between the determined first and second comparison parameter. The comparison parameters need to be expressed in the same unit for being comparable. Hence it is suggested to determine the comparison parameters in a time related value, a distance related value and/or a signal power change value. The determined values can typically be transposed to each of the unit domains.

Important is, whether the first and the second comparison parameter correspond to each other, that is they are equally taking into account measuring and calculation inaccuracies, or if they remarkably differ.

The outdoor condition indicator is set, that preferably means it gets the value "true", when the first and second comparison parameter correspond. Otherwise the outdoor condition indicator is unset, that means it gets the value "false". Likewise, the outdoor condition indicator can take other values e.g. true when an indoor condition is detected, or any other predetermined value. Equivalently the embodiment is implemented by figuring out of indoor conditions, when the time advance value and the line of sight value lead to different results, no matter if time, distance or signal power related, that is they remarkably differ.

Effectively the rationale behind this determination step considers, that the timing advance took into account walls and other obstacles affecting the air interface between the user equipment and the base station, while the path loss related value is modeled by assuming line of sight conditions. This leads to the difference in the comparison parameter in indoor conditions and thus gives an indication relating to the indoor/outdoor condition of the affected user equipment.

The method further advantageously comprises storing the outdoor condition value and wherein the step of determining the outdoor condition indicator comprises reading the stored outdoor condition value.

With this embodiment the determination step - no matter which, including the option of a combination of both - results in storing the determined outdoor condition indicator. For that the user equipment is in advantageously equipped with a permanent memory unit.

When the next time it is evaluated to check if neighbor cell base stations are to be considered for measurement, then the stored outdoor condition indicator is taken into account in order to evaluate if the predetermined suitability level or the outdoor suitability level is to choose.

According to the second aspect of the invention it is proposed a user equipment for operating with a cellular network, comprising a plurality of base stations configured to operate in a frequency range comprising a plurality of subcarriers, and at least one base station is configured to support a narrowband modulation scheme for at least one of the plurality of subcarriers, wherein at least one of the base stations is configured to activate a power boost mode comprising a power increase for at least one of the narrowband modulated subcarriers, wherein the user equipment is camping on one of the base stations, hereinafter the serving base station, further the user equipment is maintaining a predetermined suitability level of the signal strength of the serving base station, wherein for carrying out a cell reselection from the serving base station to a second base station the user equipment is configured to:
- determine an outdoor condition indicator depicting if the user equipment is operated in outdoor conditions or in indoor conditions,
   in case outdoor conditions indicator is set to outdoor:
- determine an outdoor suitability level considering the predetermined suitability level and a predetermined suitability factor,
- in case the signal strength of the serving base station is below the outdoor suitability level, carry out measurements of the signal strength of at least one of the base stations different from the serving base station, and
when the signal strength of the at least one base station different from the serving base station is above the signal strength of the serving base station, carry out a cell reselection to the measured base station different from the serving base station.
The user equipment in particular comprises transmitting circuitry and receiving circuitry, in particular implemented as a transceiver circuitry. The user equipment further comprises an antenna and processing circuitry for controlling operation of the user equipment. In particular the user equipment has a controlling unit, comprising said processing circuitry and other components, like user interface, sensors etc., and a communication unit, comprising the transmitting and receiving circuitry.
The second aspect shares the advantages of the first aspect of the invention.

As it is shown this invention advantageously solves the depicted problem and offers a solution where a cell reselection is carried out both for user equipments supporting the narrowband modulation scheme, under consideration of their local environment. This leads to a power optimized behavior, no matter where the user equipment is actually situated, and if this situation is stable or varies.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents modulation structure of the frequency range supported by a base station supporting NB-IoT, known from the prior art;
- Fig. 2: represents the situation of two user equipments in relation to two base station according to the prior art;
- Fig. 3a/b: shows the situation of two user equipments in relation to two base station according to the prior art;
- Fig. 4: represents an flow chart according to an exemplary embodiment of the inventive method;
- Fig. 5: shows the situation of a user equipments in relation to the base station according to preferred embodiment of the invention;

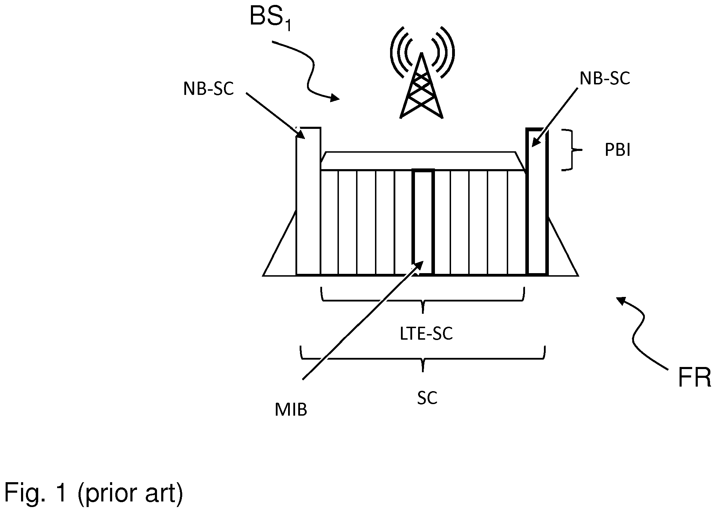

FIG. 1 schematically shows the frequency range FR of a base station BS1 of a cellular network supporting long term evolution standard (LTE). The base station is moreover capable of supporting a narrowband modulation scheme, in particular NB-IoT. The frequency range consists of a plurality of subcarriers SC, each covering a range of 15 kHz.

Generally LTE base stations are able to support more than one frequency ranges FR, in different frequency areas. For simplicity reasons it is assumed in this exemplary description, that the showed frequency range is the only one. Each LTE frequency range provides in the center of the frequency range the master information block MIB, typically covering at least one subcarrier.

As the showed base station BS1 is configured to support besides the regular LTE modulation scheme also the narrowband modulation scheme NB-IoT, it requires at least one subcarrier dedicated for NB-IoT. Such NB-IoT subcarriers are either deployed inband, that means in between of the LTE modulated subcarriers LTE-SC, stand-alone or in the guard-band. In the shown example the base station BS1 provides two narrowband modulated subcarriers NB-SC in the guard-band. These subcarriers provide a different modulation scheme, and thus user equipments camping on this base station and operating under NB-IoT only need to decode at least one of the narrowband modulated subcarriers NB-SC. A user equipment operating in regular LTE modulation would need to decode all LTE modulated subcarriers LTE-SC during one slot. That requires sufficient processing resources on the user equipment side, which is not expected for low-cost user equipments operating in NB-IoT. What is shown in this example is in the vertical direction of the subcarrier the transmitted signal power for each subcarrier, in an idealized manner. It is visible, that all LTE modulated subcarrier are transmitted in roughly the same transmission power.

However the narrowband modulated subcarriers are transmitted with higher signal power. The difference between the regular subcarriers and the narrowband subcarriers is the power increase due to the power boost mode PBI. This additional power is foreseen in the technology standard for NB-IoT, and has an amount of minimal +6 dB. It is up to the cellular network resp. the base station to decide, if and in which amount the power boost power increase PBI is applied.

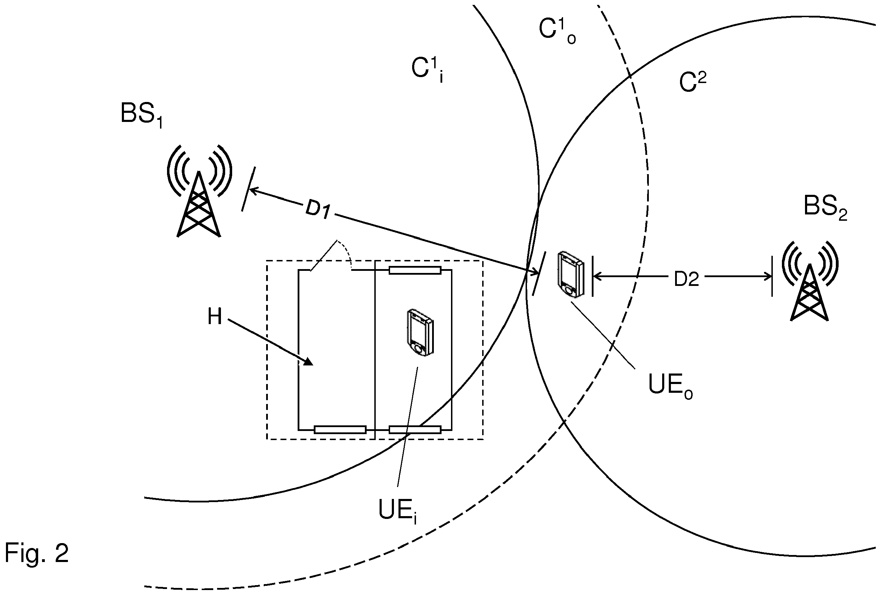

The power boost is introduced due to the fact that a lot of NB-IoT-capable user equipments are situated in indoor conditions. FIG. 2 shows the situation for two user equipments UE1, UE2, operating in proximity of two base stations BS1, BS2, which both support NB-IoT. In other words, the user equipments could chose on which base station BS1, BS2 it is best to camp.

Base stations BS1 and BS2 support NB-IoT, and for both the cell areas C¹, C² are displayed. However, for base station BS2 two different cell areas C¹ᵢ and C¹_{O} are shown. This is because at least base station BS1 has activated the power boost. Power boost increases the transmitted signal power, and thus the cell size would be extended. However, as the power boost is intended for indoor user equipments, like the one user equipment UEᵢ located in a house H, the base stations desire to achieve for NB-IoT indoor user equipments the same cell size as for base stations operating in common LTE modulation. Such indoor user equipment UEᵢ is in particular a metering device, which is moreover typical operated stationary, that means it does not leave the house in normal operation.

However, not all NB-IoT user equipments are operating indoor. In this example user equipment UE_{O} is operating outdoor, and is even not operated stationary. This applies for instance for tracking & tracing devices. Through the power boost of base station BS1 the cell area for outdoor user equipment C¹_{O} is remarkably larger than for the indoor user equipment UEᵢ.

For the user equipment UEo that is camping on base station BS1 now the situation is such that the user equipment is located in the cell area C² of base station BS2, and - as indicated by distances D1, D2 - closer to base station BS2. Due to the increased power of BS1 nonetheless user equipment UEo is still operating in the cell area C¹_{O}. At least this means that the user equipment is operating in a covered area. It is however questionable on which base station BS1, BS2 the user equipment is then configured to camp. And it is moreover questionable if this is the optimal base station in terms of quality of service, power consumption, congestion etc.

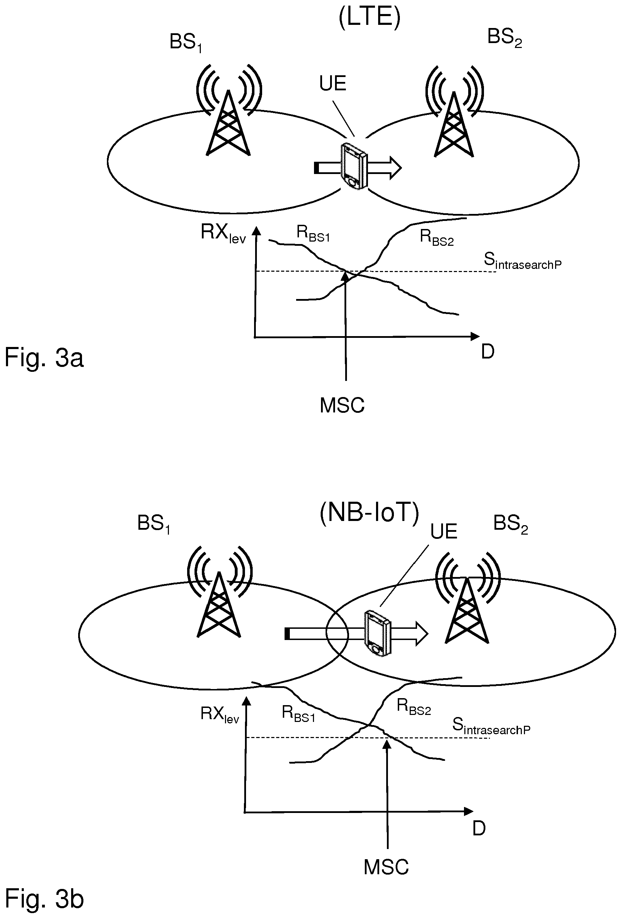

In FIG. 3a/b it is exemplary shown how the cell reselection would work today. Starting with the normal case of common LTE networks (similarly also applicable for prior generations of the cellular technology standards) in Fig 3a. Here is a user equipment which is moving from the cell area of the first and serving base station BS₁ in direction of a second neighbor base station BS₂. The question is when will the user equipment carry out a cell reselection. The first approach for answering this is, is to figure out when will the user equipment start considering a cell reselection. It is advantageous to wait as long as possible with such measurement as it saves measurements from possible neighbor cell's base stations, although the serving base station is fully suitable for serving the user equipment.

Hence, the suitability of the currently serving base station needs to reach a certain lower threshold. This is shown in the diagram below, where on the ordinate the received signal power at the user equipment receiver and on the abscissa the distance D from the base station BS₁ (resp. BS₂) is shown.

In the diagram it is visible the received signal power from base station BS₁, marked with R_{BS1} and the received signal power from base station BS₂, marked with R_{BS2}.

Further it is marked the lower threshold S_{IntrasearchP}, which depicts the received signal power at which the user equipment UE is about to start measuring signals from neighboring base stations, in this case base station BS₂. When the graph R_{BS1} crosses the threshold line S_{intrasearchP}, this crossing point is the measuring start condition MSC.

As it can be seen, at that distance from the base station BS₁, when the measurements start, still the received power from base station BS₁ R_{BS1} is slightly higher than received power from base station BS₂ R_{BS2}. When the user equipment moves further away, then both graphs cross, and after that the user equipment would carry out the cell reselection to base station BS₂, as soon it detects the condition *R_{BS1}* < *R_{BS2}* is fulfilled.

In FIG 3b it is compared to that shown the situation for a user equipment UE operating in NB-IoT on a base station BS₁, plus the user equipment is operating outdoor. Still the user equipment UE is moving away from serving base station BS1 in direction neighbor base station BS₂.

Due to the power booth for NB-IoT on both base stations (shown in this case, only for BS₁ would suffice), it turns out that the received signal power values R_{BS1}, R_{BS2} for both base station is higher than before. However the lower threshold S_{intrasearchP} remains the same. When the threshold were generally increased as well for NB-IoT devices, the user equipments operating in indoor conditions would probably never stop measuring neighbor cells signal power. The result of that situation is that now the measuring start condition MSC is met much later, when the user equipment UE has moved far into the cell area of the neighbor base station BS₂. Further at that point the received signal power of the neighbor base station BS₂ is way higher than that of the serving base station.

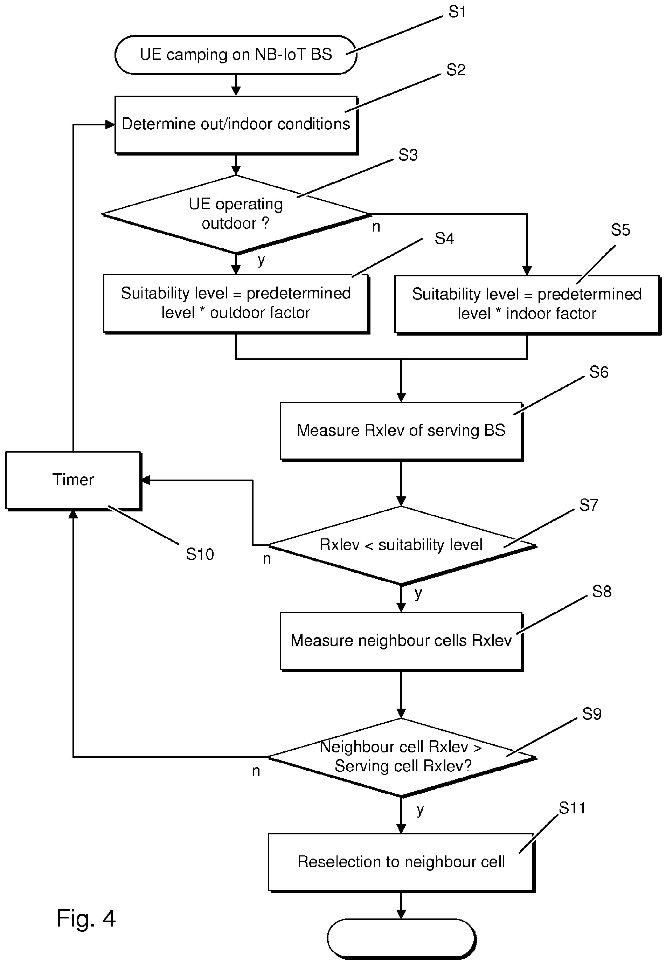

This situation is mitigated by the exemplifying procedure flow shown in FIG. 4. The method starts in step S1 with a user equipment UE camping on a base station BS operating in NB-IoT. The base station has power boost activated.

The user equipment is in particular operating not stationary, therefore it is likely that a cell reselection might become necessary. Alternatively the method also applies to stationary user equipments due to changes in network topology, no matter if temporary or permanently (like base stations in malls or sports grounds which are only activated during operation times of the sites.), or of propagation conditions.

In step S2 the user equipment UE determines if it is operating in indoor or outdoor conditions. Preferably this is happening by comparing measured values referred to timing advance and the free space path-loss based on received signal code power. This is only possible during a data connection. Hence, the determination of indoor/outdoor conditions may appropriately be done after a connection session.

Alternatively and or additionally it is preferred check for the last cell reselection, if the received signal power from the previous serving cell was remarkably lower than the received signal power from the new serving cell at the time of cell reselection. This is an indication that the cell measurement was started too late, in particular when this is happening frequently without an indication of a high velocity of the user equipment.

Preferably the outdoor resp. indoor conditions value is permanently stored in the UE in order to retrieve it at the next cycle, as long as no deriving measurements have been carried out meanwhile.

Based on the outdoor / indoor conditions determination it is in branch step S3 then checked if outdoor or indoor conditions apply. If outdoor conditions apply, the suitability level S_{intrasearchP}, which is the lower threshold value for starting neighbor cell measurements, is set in step S4 to a predetermined suitability level * outdoor factor. Typically the predetermined suitability level is the S_{intrasearchP} level used in regular LTE, and the outdoor factor increases this level by a predefined amount.

If on the other hand indoor conditions apply, then in step S5 the suitability level is set to the predetermined suitability level * indoor factor. Preferably the indoor factor is 1, as this is the value expected to work well with the regular LTE threshold.

In the next step S6 then the user equipment measures the received signal power RXlev from the serving base station. This measured value is then checked in branch step S7, if it is below the suitability level determined in the previous steps.

If the received signal power is higher than the suitability level, then the user equipment is sufficiently close to the serving base station and no cell reselection is to consider. Hence the operation continues with a timer in S10, and afterwards the procedure starts again. Preferably after timer expiry it is checked again if the user equipment is operating in indoor or outdoor conditions.

If the check in step S7 turns out that the received signal power falls below the suitability level threshold, then the procedure continues with step S8. That situation means, now it is checked if a neighbor base station might provide better suitability than the currently serving base station. For that the received signal power of other base station is measured in step S8. The results are collected in a list.

In step S9 then it is checked if at least one neighbor base station from the determined list has a better received signal power than the serving base station.

If this is not the case, then the user equipment is continuing to operate on the serving base station, therefore the procedure continues with the timer S10.

Otherwise it turns out that the identified neighbor base station provides better suitability, hence the user equipment will in step S11 carry out a cell reselection on the respective neighbor base station, and the procedure ends. If more than one neighbor base stations provide better suitability than the serving base station, then the neighbor base station with the highest suitability level is chosen for cell reselection.

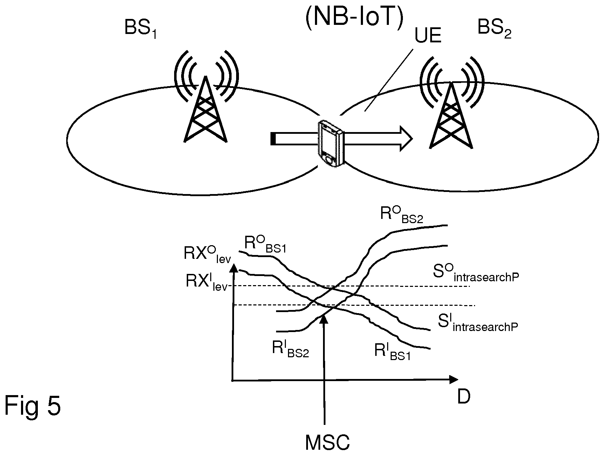

The described procedure is illustrated in FIG. 5. Here it is the same situation as shown above in Fig. 3b. But now in the diagram below it is distinguished between indoor and outdoor situation. This is done based on the determination step if the user equipment is operating in indoor or outdoor conditions.

In the diagram it is shown the received signal power of both base stations BS₁ and BS₂, once for indoor conditions R^{I}_{BS1}, R^{I}_{BS2}, and for once outdoor conditions R^{O}_{BS1}, R^{O}_{BS2}.

Additionally the suitability level for indoor conditions S^{I}_{intrasearchP} and for outdoor conditions S^{O}_{intrasearchP} is shown as threshold straight horizontal (constant) lines.

A user equipment operating in indoor conditions will receive the received signal power for indoor conditions and compares these values with the suitability level for indoor conditions. At the crossing point the measuring start condition MSC is met and the user equipment will start measuring the received signal power of neighbor base stations.

A user equipment operating in outdoor conditions will receive the received signal power for outdoor conditions, which is above the received signal power for indoor conditions due to that no walls etc. affect the propagation.

Hence for an outdoor user equipment now the suitability level for outdoor conditions is S^{O}_{intrasearchP} is taken as comparison in order to find the crossing point. This crossing point is at a similar distance from the base station BS1 as for the indoor user equipment, which is the desired effect.

In both cases - indoor and outdoor - it is moreover achieved that the measuring start condition is met prior to the situation, that the received signal power of a neighbor base station is higher than of the serving base station.

Hence, with the inventive method the envisaged situation is achieved, that no user equipment is operating too long with a serving base station which is not the best choice anymore. This is the basis with comparably low impact for ascertaining an optimal operation within a NB-IoT cellular network.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for cell reselection of a user equipment from a first to a second base station of a cellular network,
the base stations are configured to operate in a frequency range comprising a plurality of subcarriers, and at least one base station is configured to support a narrowband modulation scheme for at least one of the plurality of subcarriers, wherein at least one of the base stations is configured to activate a power boost mode comprising a power increase for at least one of the narrowband modulated subcarriers,
and the user equipment is camping on one of the base stations, hereinafter the serving base station, further the user equipment is maintaining a predetermined suitability level of the signal strength of the serving base station, the method comprising the steps for the user equipment of:
- determining an outdoor condition indicator depicting if the user equipment is operated in outdoor conditions or in indoor conditions,
in case the outdoor condition indicator is set to outdoor:
- determining an outdoor suitability level considering the predetermined suitability level and a predetermined suitability factor,
- in case the signal strength of the serving base station is below the outdoor suitability level, carrying out measurements of the signal strength of at least one of the base stations different from the serving base station, and
- when the signal strength of the at least one base station different from the serving base station is above the signal strength of the serving base station, carrying out a cell reselection to the measured base station different from the serving base station.

2. Method according to claim 1,
wherein the determination of the outdoor condition indicator comprises:
- starting measurements when the predetermined suitability level is reached
- measuring the signal strength of at least one second base station,
- setting the outdoor condition indication when the signal strength of the at least one second base station is significantly higher than the signal strength of the serving base station.

3. Method according to claim 2,
wherein the signal strength of the at least one second base station is significantly higher than the signal strength of the serving base station in case the difference of the signal strength corresponds to the minimum power increase of the power boost mode.

4. Method according to claim 1,
further comprising that the user equipment determines a timing advance value and a free-space loss value,
wherein the determination of the outdoor condition indicator comprises:
- determining a first common comparison parameter derived from the timing advance value and a second common comparison parameter derived from the free-space loss value in outdoor propagation conditions,
- setting the outdoor condition indicator when the first common comparison parameter corresponds to the second common comparison indicator, wherein the common comparison parameter is at least one out of:
- a time related value,
- a distance related value, and/or
- a signal power change value.

5. Method according to claim 4,
wherein the free space loss value is derived from the measured signal strength at the user equipment and from the emitted power received from the serving base station, further considering transmitter antenna gain and receiver antenna gain.

6. Method according to at least one of the claims 2 to 5
further comprising the step of storing the outdoor condition value and wherein the step of determining the outdoor condition indicator comprises reading the stored outdoor condition value.

7. Method according to at least one of the previous cells
wherein the predetermined suitability factor relates to the power increase in the power boost mode.

8. User equipment for operating with a cellular network, comprising a plurality of base stations configured to operate in a frequency range comprising a plurality of subcarriers, and at least one base station is configured to support a narrowband modulation scheme for at least one of the plurality of subcarriers, wherein at least one of the base stations is configured to activate a power boost mode comprising a power increase for at least one of the narrowband modulated subcarriers,
wherein the user equipment is camping on one of the base stations, hereinafter the serving base station, further the user equipment is maintaining a predetermined suitability level of the signal strength of the serving base station, wherein for carrying out a cell reselection from the serving base station to a second base station the user equipment is configured to:
- determine an outdoor condition indicator depicting if the user equipment is operated in outdoor conditions or in indoor conditions,
in case outdoor conditions indicator is set to outdoor:
- determine an outdoor suitability level considering the predetermined suitability level and a predetermined suitability factor,
- in case the signal strength of the serving base station is below the outdoor suitability level, carry out measurements of the signal strength of at least one of the base stations different from the serving base station, and
- when the signal strength of the at least one base station different from the serving base station is above the signal strength of the serving base station, carry out a cell reselection to the measured base station different from the serving base station.

9. User equipment according to claim 8,
wherein for determining of the outdoor condition indicator the user equipment is configured to:
- start measurements when the predetermined suitability level is reached
- measure the signal strength of at least one neighbor cells base station,
- set the outdoor condition indication when the signal strength of the at least one neighbor cells base station is significantly higher than the signal strength of the serving base station.

10. User equipment according to claim 9,
wherein the signal strength of the at least one neighbor cell base station is significantly higher than the signal strength of the serving base station in case the difference of the signal strength corresponds to the minimum power increase of the power boost mode.

11. User equipment according to claim 8,
further configured to determine a timing advance value and a free-space loss value, wherein for determining of the outdoor condition indicator the user equipment is configured to:
- determine a first common comparison parameter derived from the timing advance value and a second common comparison parameter derived from the free-space loss value in outdoor propagation conditions,
- set the outdoor condition indicator when the first common comparison parameter corresponds to the second common comparison indicator.
wherein the common comparison parameter is at least one out of:
- a time related value,
- a distance related value, and/or
- a signal power change value.

12. User equipment according to claim 11,
wherein free space loss value is derived from the measured signal strength at the user equipment and from the emitted power from the serving base station, further considering transmitter antenna gain and receiver antenna gain.

13. User equipment according to at least one of the claim 9 to 12,
wherein the user equipment is further configured to store the outdoor condition value, and
wherein for determining of the outdoor condition indicator the user equipment is configured to read the stored outdoor condition value.

14. User equipment according to at least one of the claims 8 to 13,
wherein the predetermined suitability factor relates to the power increase in the power boost mode.
